# EUROPEAN PATENT APPLICATION

(11) **EP 3 087 843 A1**
(43) Date of publication of application: **02.11.2016**
(21) Application number: 14873924.6
(22) Date of filing: 24.12.2014
(51) Int. Cl.: A23B 7/16, A23B 7/154, A23B 7/157

(54) **EDIBLE COATING FOR PRESERVING FRUIT PIECES, MANUFACTURING AND APPLICATION METHOD THEREOF**

(30) Priority: 27.12.2013 ES 201331921
(71) Applicant: Production and Innovation on Edible Coatings S.L., 31110 Noain (Navarra) (ES)
(72) Inventor: ROJAS GRAÜ, María Alejandra, E-31110 Noain (Navarra) (ES); URRUTIA LARRAZ, Raquel, E-31110 Noain (Navarra) (ES); ROYO LIZARBE, Maite, E-31110 Noain (Navarra) (ES); OSÉS FERNÁNDEZ, Javier, E-31110 Noain (Navarra) (ES)
(74) Representative: Agasse, Stéphane
(86) International application number: PCT/ES2014/070976
(87) International publication number: WO 2015/097335

(57) **Abstract**

An edible coating for the preservation of pieces of fruit, the manufacturing and application process thereof, wherein the coating is applied to the fruit by way of a first aqueous solution of an alginate having a high viscosity of above 250 mPa.s and a low concentration of between 0.05% a 1% by weight relative to the total weight of the first aqueous solution and by way of a second aqueous solution including a cross-linking agent of calcium ascorbate or calcium lactate, to cause the alginate to gel and including citric acid as antioxidant agent, or a combination of citric acid and sodium ascorbate, the second aqueous solution also possibly containing additionally malic acid as antimicrobial agent, where the citric acid and, as the case may be, the malic acid, behave as metal ion chelating agents.

## Description

### Field of the Invention

The present invention relates to the preservation of freshly-cut fresh fruit by providing an edible coating, applicable on an industrial scale, having a polysaccharide base to create a selective barrier to the exchange of gases and the loss of moisture allowing the texture and flavor of the freshly cut fruit to be retained. The coating is especially appropriate for application on fruit having a high internal water content, such as pineapple, melon and strawberries, although it can be applied over any type of fruit which in the industrial preparation processing thereof requires the fruit to be cut, peeled, chopped into pieces and finally packaged.

### Background Art

Fresh fruit deteriorates quickly and particularly when the pulp of the fruit is exposed to the environment, such as happens when the fruit is peeled and cut into pieces, with the occurrence of browning, softening, appearance of disagreeable flavors and growth of microorganisms which reduce the shelf life of the freshly cut fruit.

To decelerate said deterioration reactions in the industrial processing of the fruit, the washing, peeling, chopping into pieces and packaging operations are carried out in a chain of cold with temperatures of under 8°C, whereby the breathing rate of the cut tissues is lowered, with the enzymes related with the changes of color and with texture degradation processes being held latent, further to minimizing the growth of microorganisms which cause alterations.

Habitually, recourse has also been had to the use of preservatives which, in combination with the use of low temperatures, help to preserve the fruit. Thus, there is known the use of preservatives for fruits, based on calcium and antioxidant solutions which comprise ascorbate and calcium among the components thereof, such as is the case of US3754938A, US4011348, US4818549, WO1997023138, EP746207A1, DE3624035, ES2011757 and GB2100575.

For example, WO1994012041 discloses a preservative for maintaining the peeled and chopped fresh fruit comprising calcium ions, ascorbate ions and water, with ascorbic acid and calcium chloride percentages of 0.25% to 2% being contemplated in both cases. The preservative has metal ion complexants (identified as chelating agents), in a proportion of 0.5% or more by dry weight, i.e., excluding the water.

On the other hand, ES2307473 discloses a process for the preservation of peeled and chopped fresh fruit, in which the preservative used, like in the case of WO1994012041, consists of a solution comprising calcium, ascorbate ions and water, with the ascorbate ions and calcium ions being present in an ionic ratio the same as that of the aforementioned WO1994012041, but, unlike the latter, the amount of metal ion chelating agents in the preservative is less than 0.5% by weight of the ingredients, excluding the water. In this document, the calcium ions are obtained from calcium hydroxide, calcium salt or a mixture of both, while the ascorbate ions are obtained from ascorbic acid, ascorbate or erythorbate. There is also described the possibility of using calcium ascorbate or calcium erythorbate as source of the calcium ions and the ascorbate ions.

It is well known that these calcium-salt-based antioxidant preservatives allow the enzymatic browning to be avoided, prolonging the preservation time of the fruit. Nevertheless, these compounds do not prevent other problems proper to cut fruit, such as the surface dehydration undergone by the tissue once cut.

For this reason, in recent years there has proliferated the use of edible coatings, especially of a polysaccharide base, which form a transparent film on the surface of the fruit, allowing, on the one hand, the surface dehydration of the product to be prevented and on the other hand, a barrier to be formed limiting the loss of the fruit's internal water. These polysaccharide-based edible coatings may be formed by any polymer capable of gelling and forming a coating, the most used within this group being maltodextrin, methyl cellulose, carboxymethyl cellulose, pectin, alginate or gellan. Furthermore, the edible coating serves as a carrier for active ingredients such as antioxidants and antimicrobial agents, allowing the shelf life of the cut fruits to be extended in a broader context.

The main polysaccharides with which the edible coatings are prepared are marketed in powdered form, it being necessary to dissolve them in water to obtain an aqueous solution with which to coat the product. To get such polysaccharides to dissolve in the water and that the solution be appropriate to act as a coating, it is necessary to heat the water of the solution to a temperature of above 50°C. This is particularly relevant for coatings using alginate or pectin as polysaccharide matrix, in which the manufacturers themselves of these types of polysaccharide recommend their dispersion in warm water to allow for a correct dissolution.

It is precisely the need of heating to dissolve the polysaccharide that causes this type of edible coatings not to be applied on an industrial scale in the processing of fresh fruit, in spite of their preservation properties having been scientifically demonstrated, since their use obliges the availability of equipment for heating the solution, with the cost of acquiring the machinery, assembly and maintenance associated therewith, further to the associated energy expense. On the other hand, with all the processing of the fruit being carried out at low temperatures, below 8°C, one has to wait for the polysaccharide solution to cool down to be able to apply it to the pieces of fruit.

US2013/0029012 discloses an edible coating for fruit, comprising a polysaccharide selected from the group consisting of carrageenan, gellan, alginate and pectin, calcium as cross-linking agent to cause the gelling of the polysaccharide, calcium ascorbate to precise, an antioxidant agent such as citric acid, ascorbic acid or a combination of both, and vanillin as antimicrobial agent and as masking agent for the flavor associated with the use of the alginate.

As may be seen in the examples of embodiments of this document, the edible coating is applied over the pieces of fruit in two solutions. Thus, a first solution is prepared, in which it is necessary to dilute with water at a temperature of 50°C a concentration of between 1% - 1.5% (w/w) of sodium alginate and 0.1% (w/w) of vanillin essence. Subsequently, said solution has to be cooled to a temperature of 10°C to be able to be applied over the cut pieces of fruit. For the gelling of the sodium alginate to occur, the pieces of fruit coated with the first solution are placed in a second calcium ascorbate solution at a concentration of 15% (w/w). The concentrations are given in wt.% relative to the total weight of the solution, including the water.

The process of dissolving the polysaccharides in warm water is known, in fact, hereinafter there are listed different scientific publications of the same inventor as the present invention where mention is made of alginate based edible coatings likewise requiring heating to obtain adequate dissolution.

Rojas-Graü, M.A., Tapia, M.S., Martin-Belloso, O. 2008. "Using polysaccharide-based edible coatings to maintain quality of fresh-cut Fuji apples".Lebensm-Wiss Technol. 41, 139-147; Rojas-Graü, M.A., Raybaudi-Massilia, R.M, Soliva-Fortuny, R., Avena-Bustillos, R.J., McHugh, T.H., and Martín-Belloso, O. 2007."Apple puree-alginate coating as carrier of antimicrobial agents toprolong shelf life of fresh-cut apples".Postharvest Biol. Technol. 45:254-264; Montero-Calderón, M., Rojas-Graü, M.A., and Martín-Belloso, O. 2008."Effect of packaging conditions on quality and shelf-life of fresh-cut pineapple (Ananascomosus)". Postharvest Biology and Technology, 50, 182-189;Robles-Sánchez, R.M., Rojas-Graü, M.A.,Odriozola-Serrano, I., González-Aguilar, G.,Martin-Belloso, O. "Influence of Alginate-Based Edible Coating as Carrier of Antibrowning Agents on Bioactive Compounds and Antioxidant Activity in Fresh-cut Kent Mangoes". 2013. LWT - Food Science and Technology; Tapia, M.S., Rojas-Graü, M.A., Rodríguez, F.J., Ramirez, J., Carmona, A., and Martin-Belloso, O. 2007. "Alginate and gellan based edible films for probiotic coatings on fresh-cut fruits". Journal of Food Science, 72, E190-E196; Raybaudi-Massilia, R.M., Rojas-Graü, M.A.,Mosqueda-Melgar, J., Martín-Belloso, O. "Comparative Study on Essential Oils Incorporated into an Alginate-Based Edible Coating To Assure the Safety and Quality of Fresh-Cut Fuji Apples". 2008. Journal of Food Protection,71, 6; Tapia, M.S., Rojas-Grau, M.A.,Carmona, A., Rodriguez, F. J.,Soliva-Fortuny, R.,Martin-Belloso, O."Use of alginate- and gellan-based coatings for improving barrier, texture and nutritional properties of fresh-cut papaya". 2008. Food Hydrocolloids 22, 8, 1493-1503; Rojas-Graü, M.A., Tapia, M.S., Rodríguez, F.J., Carmona, A.J., Martin-Belloso,O., 2007. "Alginate and gellan-based edible coatings as carriers of antibrowning agents applied on fresh-cut Fuji apples". Food Hydrocolloids 21, 118-127.

There is required, therefore, an edible coating for pieces of fruit that avoids the need to heat the polysaccharide solution and, therefore, which may be applied directly in the industrial processing of fresh fruit.

### Object of the Invention

The object of the present invention is an edible coating for application over pieces of fresh fruit which have been minimally processed by operations of washing, peeling and slicing, in the industrial processing thereof. The invention also relates to the process of preparing the edible coating and the application thereof over the pieces of fruit.

The edible coating for the preservation of the pieces of fruit is applied by way of two aqueous solutions, a first polysaccharide-based aqueous solution and a second aqueous solution including a cross-linking agent, an antioxidant agent and additionally an antimicrobial agent, creating by way of the application of both aqueous solutions a protective barrier which preserves and prevents the drying out, the browning and the loss of water from the pieces of fruit.

As the polysaccharide base of the first aqueous solution there is used a high viscosity alginate, which is present in the first aqueous solution at a very low concentration. The alginate used has a viscosity of over 250 mPa.s and is at a low concentration of between 0.05% and 1% by weight relative to the total weight of the first aqueous solution. Preferably, the alginate is at a concentration of between 0.1% and 0.6% by weight relative to the total weight of the first aqueous solution.

The polysaccharide base of the first aqueous solution, further to alginate, may comprise additionally a low methoxyl pectin and, therefore, with an appropriate degree of viscosity, the pectin also being present in the first aqueous solution at a very low concentration. The pectin used has a degree of methoxylation of between 35% and 45% and is at a low concentration of between 0.05% and 1% by weight relative to the total weight of the first aqueous solution. Preferably the pectin is at a concentration of between 0.1% and 0.5% by weight relative to the total weight of the first aqueous solution.

The second aqueous solution, like the already cited background art, is a solution in water of powdered solid components comprising calcium ions acting as cross-linking agent gelling the polysaccharide base of the first aqueous solution. Thus, depending on the type of fruit to be coated, in the second aqueous solution there is used a calcium cross-linking agent which may be calcium ascorbate or calcium lactate.

Where calcium ascorbate is used as cross-linking agent, this is at a concentration of between 2% and 15% by weight relative to the total weight of the second aqueous solution. Preferably, the calcium ascorbate is at a concentration of between 3% and 12% by weight relative to the total weight of the second aqueous solution.

Where calcium lactate is used as cross-linking agent, this is at a concentration of between 2% and 8% by weight relative to the total weight of the second aqueous solution. Preferably, the calcium lactate is at a concentration of between 2.5% and 6% by weight relative to the total weight of the second aqueous solution.

The second aqueous solution includes as antioxidant agent citric acid or a combination of citric acid and sodium ascorbate. Additionally, the second aqueous solution may contain malic acid as antimicrobial agent.

The concentration of citric acid alone or in combination with the malic acid is above 0.5% by weight relative to the total weight of the components of the second aqueous solution, excluding the water.

The citric acid and, as the case may be, the malic acid, behave as metal ion chelating agents. It is known that the chelating agents coordinate and sequestrate said ions, preventing them from being left free for other processes, and may act indirectly as antimicrobial agents.

The citric acid is at a concentration of between 1% and 20% by weight relative to the total weight of the components of the second aqueous solution, excluding the water. Preferably, at a concentration of between 7% and 12% by weight relative to the total weight of the components of the second aqueous solution, excluding the water.

The sodium ascorbate is at a concentration of between 5% and 80% by weight relative to the total weight of the components of the second aqueous solution, excluding the water. Preferably, at a concentration of between 25% and 50% by weight relative to the total weight of the components of the second aqueous solution, excluding the water.

Where malic acid is used as antimicrobial agent, it is at a concentration of between 1% and 45% by weight relative to the total weight of the components of the second aqueous solution, excluding the water. Preferably, at a concentration of between 10% and 30% by weight relative to the total weight of the components of the second aqueous solution, excluding the water.

According to the object of the invention, the complete process is developed in cold, at the industrial processing temperature of the fruit (4° - 8°C), from the preservation of the components of the edible coating and of the fruit, passing through the dissolving of the polysaccharide or polysaccharides which was carried out with heating up to now, to the storing and packaging of the already coated fruit.

In the presently known embodiments, it was necessary to heat the polysaccharide and water mixture to a considerably high temperature (above 50°C). With the proposal of the present invention, with it being possible to dissolve the polysaccharide or polysaccharides at low temperature, the costs of assembly and maintenance of the preservative manufacturing facility are reduced, on not having to use heating machines and the energy consumption is also reduced, on not having to heat the mixture, which on an industrial scale means an important energy saving.

Furthermore, since, to obtain optimum results in the preservation of the fruit, the application of the edible coating to the fruit must be carried out at a low temperature, it is very important to be able to carry the prior stage of preparation of the coating out also at low temperature, to avoid downtimes after the preparation of the coating solution.

In fact, according to the present invention, on carrying out the dissolution of the polysaccharide or polysaccharides and remaining components at a low temperature, and immediately afterwards proceeding with the application thereof on the pieces of fruit, without having to wait for the heated polysaccharide or polysaccharides solution to cool down, the times between steps and the general time of the process are reduced. Together with this, the reduction of the time between steps is particularly important when calcium ascorbate, which is a light-sensitive compound, prone to oxidation, is used. Furthermore, the omission of high temperatures prevents the acceleration of undesired reactions in the coating, as well as on the fruit once it has been coated.

A further object of the invention is the manufacturing process of the edible coating for pieces of fruit, which consists of the following steps of:
- preparing the first polysaccharide-based aqueous solution, by mixing the polysaccharide, or polysaccharides, with cold water, between 4°C and 8°C, with constant stirring until dissolution is completed.
- preparing the second aqueous solution of calcium, antioxidant and, as the case may be, of the antimicrobial agent, by mixing the calcium, the antioxidant agent and the antimicrobial agent, which are in powdered form, in order, once these powdered ingredients are intimately mixed, to dissolve the mixture in cold water, with constant stirring, at a temperature of between 4°C and 8°C.

The process of applying the edible coating to the pieces of fruit comprises the following steps of:
- washing, peeling and slicing the fruit, all at a temperature of around 4°C.
- applying a first cold aqueous polysaccharide-based solution to the pieces of fruit, at between 4°C and 8°C, for a period of time of between 40 seconds and 120 seconds.
- removing the excess coating of the first aqueous solution.
- applying over the pieces of fruit a second aqueous solution, also at low temperature of between 4°C and 8°C, containing the calcium, the antioxidant agent and, as the case may be, the antimicrobial agent, for a period of time of between 40 seconds and 120 seconds.
- removing the excess coating of the second aqueous solution.
- packaging the coated fruit.

The solutions may be applied by immersion of the pieces of fruit in the solutions, by spraying the solutions over the pieces of fruit, or by any other similar technique allowing the pieces of fruit to be coated.

In accordance with all this, there is obtained an edible coating, for the preservation of pieces of fruit, using a polysaccharide or polysaccharides of high viscosity and low concentration, allowing them to dissolve at the low temperature of 4°C to 8°C at which the fruit is normally industrially processed, overcoming the heating problems of the former solutions.

Also, the use of high viscosities and low concentrations of the polysaccharide or polysaccharides also allows the step of drying/removing the excess coating to be selectively omitted. There is thus obtained an edible coating imperceptible to the eye and the taste of the user, which adequately fulfils its preservation properties and which, since low alginate concentrations are used, does not add a flavor, also avoiding the need to use masking agents, such as the vanillin of previous solutions.

### Detailed Description of the Invention

The edible coating of the invention is formed by two aqueous solutions, which are applied consecutively covering the pieces of fruit. The first aqueous solution is obtained by dissolving alginate, or a combination of alginate and pectin, in cold water (4°C to 8°C).

The second aqueous solution is obtained by dissolving a calcium cross-linking agent and an antioxidant in cold water (4°C to 8°C). The calcium causes the alginate of the first aqueous solution to gel or, as the case may be, the alginate and pectin to gel. The calcium may be obtained from calcium ascorbate or calcium lactate, one or the other being used depending on the type of fruit to be coated. The antioxidant agent preserves the color of the fruit and delays browning. As antioxidant agents, there is used citric acid or a combination of citric acid and sodium ascorbate. Additionally, the second aqueous solution may include malic acid as an antimicrobial agent, which functions as an inhibitor of the growth of microorganisms, molds and yeasts, during the storage of the pieces of fruit.

Hereinafter there is given a table, in no case limitative, with the components which each of the solutions with which the pieces of fruit are coated may include to obtain the edible coating of the invention, as well as the weight percentages at which it has been contemplated that those components may be found in their respective aqueous solution.

The percentages are expressed in % w/w (weight of the component relative to the total weight of the respective aqueous solution). In one column, the weight percentage of each component in its respective solution, excluding the water, is given and in the other column the weight percentage of each component in its respective solution, including the water.

| | % w/w (excluding the wáter) | % w/w (including the water) |
|---|---|---|
| *First aqueous solution* | | |
| Alginate | 100% | 0,1 % - 0,6% |
| Alginate+Pectin | [5% - 95%] + [5% - 95%] | [0,1 % - 0,5%] + [0,1% - 0,5%] |

| *Second aqueous solution* | | |
|---|---|---|
| Calcium Ascorbate | 55% - 80% | 3% - 12% |
| Calcium Lactate | 60% - 75% | 2,5% - 6% |
| Citric Acid | 7% - 12% | 0,2% - 2% |
| Sodium Ascorbate | 25% - 50% | 3% - 7% |
| Malic Acid | 10% - 30% | 0,5% - 3% |

The alginate used has a high viscosity, the viscosity of the alginate being over 250 mPa.s. The measured viscosity is of a 1% w/w aqueous alginate solution, using a Nahita 801 N/SC88808 viscometer, with a n° 2 spindle, at 30 rpm and 21°C temperature.

The relationship between the high viscosity of the alginate and the low concentration allows an edible coating for pieces of fruit, with appropriate physical and chemical properties to be obtained, which guarantees an adequate coating and preservation of the pieces of fruit, being imperceptible to the user, without the latter being able to appreciate it at sight, without contributing any texture at the time of eating and without contributing any flavor.

Hereinafter, some non-limitative examples of edible coatings for pieces of fruit, according to the present invention, are illustrated.

### Example 1: Effect of the contact time of the edible coating on the sensory quality of pieces of melon.

Cantaloupe melons were used. These were washed on the surface and disinfected by immersion in a sodium hypochlorite (80 ppm) solution. After disinfection, the melons were peeled and sliced, subsequently to remove the seeds from the inside. The pieces obtained were manually cut into cubes.
The edible coating was formed by two solutions. A first solution formed by a 0.5% w/w alginate solution and a second solution formed by a mixture of 3% w/w of calcium lactate, 0.5% w/w of citric acid and 3% w/w of malic acid.

The alginate solution was prepared by directly dissolving 5.03 g of the polysaccharide per liter of cold water, holding said solution under constant stirring until it was completely dissolved. The mean viscosity of this solution was 45 mPa.s, which was measured using a Nahita 801 N/SC88808 viscometer, with a n° 2 spindle, at 30 rpm and 21°C temperature.

In the second case, 32.09 g of calcium lactate, 5.35 g off citric acid and 32.09 g of malic acid per each liter of water were dissolved. The water temperature of both solutions was 6°C, said solutions being held at this temperature until their use as coatings.

The pieces of melon were immersed in the alginate solution for one minute. After this period of time, the melon was drained for 1 minute, the excess coating being removed, to be subsequently placed in the second solution of antioxidants and calcium. The immersion time in this second solution was from 1 to 4 minutes. After this second solution, the pieces of melon were drained for 1 minute to subsequent packaging. The coated fruit was manually packaged in plastic packages (PET), without the use of a modified atmosphere, and stored at 4°C for 10 days.

During this period of time, a sensory evaluation was made of the product to establish how the contact time modifies the quality characteristics of the product, mainly the flavor, the texture and the loss of liquid. The evaluation scale was from 1 to 5. In the case of the flavor, 5 represented a non-acid flavor (the natural one of the melon) and 1, a very acid flavor. In the case of the texture, 5 represented a very firm fruit and 1, a soft fruit. Finally, with respect to the accumulation of liquids, 5 represented absence of liquid in the package and 1, an excessive accumulation of liquid in the package.

As is to be seen in the following table, the contact time of the fruit with the second edible coating solution directly affected the quality of the pieces of melon, an intense acid flavor being appreciable during the entire storage period, in those fruits whose period of contact was 4 minutes. Further to the intense acid flavor, it was also possible to observe a slight effect on the firmness of the pieces of fruit, which diminished as the storage period increased. Also evident was a greater accumulation of liquid in the package because of a greater damage to the tissue in those samples containing pieces of melon whose contact time was 4 minutes. In general, the pieces of melon whose contact time with the second coating solution was 1 minute, maintained their flavor and texture characteristics similar to the freshly cut fruit, during the 10 days storage time, 1 minute being the time established for the application of the coating.

**Table 1. Effect of the contact time with the edible coating on the quality of pieces of minimally processed melon.**

| | | Parameters evaluated | | |
|---|---|---|---|---|
| Contact time | Days in storage | Flavor | Texture | Accumulation of liquid |
| 1 min | 1 | 4 | 5 | 5 |
| | 5 | 5 | 5 | 5 |
| | 10 | 5 | 4 | 4 |
| 4 min | 1 | 1 | 4 | 4 |
| | 5 | 2 | 3 | 3 |
| | 10 | 3 | 2 | 1 |

### Example 2. Effect of the use of an edible coating on the shelf life of pieces of cut pineapple.

Pineapples with a state of ripeness adequate for their minimal processing were used. Said whole pineapples were washed on the surface and subsequently immersed for 5 minutes in a sodium hypochlorite (80 ppm) bath for subsequent disinfection. After this bath, the pineapples were peeled, cored and cut lengthwise to obtain canoe shaped pieces which were subsequently cut into cubes.

The pieces of pineapple were coated with an edible coating composed of two solutions. A first solution formed by a 0.6% w/w alginate solution which was prepared by dissolving 6.04 g of alginate per each liter of cold water (6°C) under constant stirring until it was completely dissolved. The mean viscosity of this first solution was 65 mPa.s, which was measured using a Nahita 801 N/SC88808 viscometer, with a n° 2 spindle, at 30 rpm and 21°C temperature.

The second solution was formed by a solution of 3% w/w calcium ascorbate, 2% w/w of citric acid and 3% w/w of malic acid, for which 32.61 g of calcium ascorbate, 21.74 g of citric acid and 32.61 g of malic acid per each liter of cold water were dissolved. Both solutions were prepared and applied at 6°C.

Once the solutions were obtained, the pieces of pineapple were immersed in the alginate solution for 1 minute. After this period, the pineapple was drained for the same length of time to remove the excess coating. Subsequently, the fruit was placed in the second solution, being held immersed for 1 minute. After this second solution, the pieces of pineapple were drained for 1 minute, before being manually packaged in plastic packages (PET), without using a modified atmosphere. Once packaged, the packages containing the fruit were stored at 4°C for 10 days.

Uncoated pieces of pineapple were used to be able to compare the effect of the coating on the quality of the end product. In this case, the pieces of pineapple were given a bath of cold water for 1 minute and then packaged under the same conditions as the coated pineapple. During the storage period, a sensory evaluation was performed of the product containing the edible coating or not, with a view to being able to establish the effect of the edible coating on minimally processed pieces of pineapple. Characteristics such as the color, texture and loss of liquid of the packaged product were evaluated. The scale of evaluation was from 1 to 10. with 10 being the best score awarded to the quality parameter evaluated, namely, the same quality as the freshly cut product and 1 representing a low quality product.

The application of an edible coating formed by a mixture of alginate with active agents on pieces of pineapple allowed the product to be maintained for 10 days storage with the same quality as the freshly cut one. In comparison with the control pineapple, the coated product maintained the color, flavor, odor and texture throughout the entire storage period, avoiding furthermore the accumulation of liquid in the package where the pieces were stored. In turn, the uncoated pieces of pineapple showed brown tones, a softer texture and a high accumulation of liquid in the package, as may be seen in Table 2. Furthermore, the presence of fermentation metabolites in the control samples was evident throughout the 10 days of storage, with flavors and aromas proper to these processes being detected.

Table 2. Evolution of the shelf life of minimally processed pineapple containing an edible coating as protective treatment, or not.

| Sample | | Parameters evaluated | | | |
|---|---|---|---|---|---|
| | Days in storage | Color | Texture | Accumulation of liquid | General appearance |
| Coated pineapple | 1 | 10 | 10 | 10 - None | Very good |
| | 5 | 10 | 10 | 10 - None | Very good |
| | 10 | 10 | 9 | 9 - Little | Good - with slight accumulation of liquid |
| Uncoated pineapple | 1 | 10 | 10 | 9 - Little | Good |
| | 5 | 7 | 9 | 6 - Medium | Regular - Onset of darkening |
| | 10 | 4 | 7 | 4 - Much | Bad- browning, a lot of liquid and onset of fermentation |

### Example 3. Effect of the use of an edible coating on the quality and microbiological shelf life of pieces of minimally processed melon.

In order to define the effect of the edible coating on the quality and microbiological shelf life of pieces of melon, Cantaloupe melons were used. These were washed on the surface and disinfected by immersion in a sodium hypochlorite (80 ppm) solution. After being disinfected, the melons were peeled and cut into pieces, subsequently to remove the seeds from the inside. The pieces obtained were manually cut into cubes.

After the cut fruit had been obtained, the edible coating, formed by two solutions, was prepared. A first solution formed by a 0.5% w/w alginate solution and a second solution formed by a mixture of 4% w/w of calcium ascorbate, 0.5% w/w of citric acid and 3% w/w of malic acid. The alginate solution was prepared by directly dissolving 5.03 g of the polysaccharide per each liter of cold water, holding said solution under constant stirring until it was completely dissolved. The mean viscosity of this solution was 45 mPa.s, which was measured using a Nahita 801 N/SC88808 viscometer, with a n° 2 spindle, at 30 rpm and 21°C temperature. In the second case, 43.24 g of calcium ascorbate, 5.41 g of citric acid and 32.43 g of malic acid per each liter of water were dissolved. In both cases, the water temperature was 6°C, the solution being held at this temperature until its use as a coating.

The pieces of melon were immersed in the alginate solution for one minute and were subsequently drained to remove the excess coating (1 minute). The immersion time in this second solution was 1 minute. After the application of this second solution, the pieces of melon were drained for 1 minute to subsequent packaging. The coated fruit was manually packaged in plastic packages (PET), without the use of a modified atmosphere. All the samples were stored at 4°C for 10 days. In the case of the control samples, the pieces of melon were treated with a water bath for 1 minute and subsequently packaged under the same conditions as the coated melon.

The sensory quality of the product was subject to follow-up during the whole storage period, there being evaluated mainly the changes in firmness, flavor and odor. A microbiological analysis was also made at the end of the shelf life of the product, to determine the effectiveness of the edible coating as carrier of an antimicrobial agent against the growth of aerobic mesophilic bacteria, molds and yeasts.

In general, there was observed a general maintenance of the quality of the pieces of melon with the use of an edible coating, a firm texture, good flavor and absence of fermentation metabolites (bad odors) being detected in the coated samples, throughout the storage period. After 10 days storage, the counts of aerobic mesophilic bacteria, molds and yeasts in the coated melon samples were lower than those observed in the control samples, such as may be seen in Table 3. The edible coating, further to being effective in maintaining the characteristics of quality of the fruit, is also capable of prolonging the microbiological shelf life of minimally processed melon.

**Table 3. Microbiological shelf life of minimally processed melon after 10 days storage.**

| | Molds yeasts | and Aerobic Mesophiles (UFC/g) |
|---|---|---|
| Coated melon (0.5% alginate + 4% calcium ascorbate + 0.5% citric acid + 3% malic acid) | 2,2 x 10⁶ | 2,36 x 10⁵ |
| Uncoated melon (Control) | 8,5 x 10⁷ | 5,2 x 10⁶ |

### Example 4. Effect of the use of an edible coating on the shelf life of minimally processed strawberries.

Strawberries at an intermediate state of ripeness were used. These were washed on the surface and subsequently immersed for 1 minute in a sodium hypochlorite (80 ppm) bath for disinfection thereof. After this bath, the strawberries were rinsed with clean water to remove the excess sodium hypochlorite, at the same time the green sepals of these fruits were removed

The strawberries were coated with two solutions. The first solution was formed by a mixture of polysaccharides: alginate at 0.3 % w/w and low methoxyl pectin at 0.2% w/w. This solution was prepared by dissolving 3.02 g of alginate and 2.01 g of pectin per each liter of cold water (6°C) under constant stirring until they were completely dissolved. The mean viscosity of this first solution was 20 mPa.s, which was measured using a Nahita 801 N/SC88808 viscometer, with a n° 1 spindle, at 30 rpm and 21°C temperature. The second solution was formed by a mixture of calcium ascorbate (3% w/w), sodium ascorbate (6% w/w) and citric acid (1.5% w/w), for which 33.52 g of calcium ascorbate, 67.04 g of sodium ascorbate and 16.76 g of citric acid per each liter of cold water (6°C) were dissolved. Both solutions were applied to the strawberries at 6°C.

After cleaning, the strawberries were immersed firstly in the first polysaccharides solution for 1 minute. After this period, they were drained, for 1 minute, to remove the excess coating. Subsequently, the strawberries were placed in the second solution for 1 minute and then drained for the same time prior to being packaged manually in plastic packages (PET), without using a modified atmosphere. Once packaged, the packages containing the strawberries were stored for 10 days at 4°C. Uncoated strawberries were used to be able to compare the effect of the coating on the quality of the end product. In this case, the strawberries were given a bath of cold water, drained and subsequently packaged under the same conditions as the coated product.

During the storage time, a sensory evaluation of the product containing the edible coating or not was carried out to be able to establish the effect of the edible coating on the minimally processed strawberries. Characteristics such as color, texture, flavor and quality of the packaged product were evaluated.

The application of an edible coating formed by a mixture of polysaccharides on minimally processed strawberries allowed a product of excellent quality after 10 days storage to be obtained. The coated strawberries maintained the original intense red color of the product, as well as a firm texture and a good flavor and odor of the product during storage. On the contrary, the uncoated strawberries showed a rather dull red color and dark tones throughout the storage, a notable loss of the texture thereof being also evident. Furthermore, there could also be appreciated an accumulation of odors proper to fermentation processes in the uncoated product at the end of storage.

## Claims

1. An edible coating for the preservation of pieces of fruit, which is applied over the pieces of fruit by way of a first polysaccharide-based aqueous solution and a second aqueous solution including a calcium cross-linking agent for causing the gelling of the polysaccharide of the first aqueous solution, **characterized in that** as polysaccharide base there is used an alginate having a high viscosity of over 250 mPa.s and having a low concentration of between 0.05% and 1 % by weight relative to the total weight of the first aqueous solution, and **in that** there is used as cross-linking agent calcium ascorbate or calcium lactate, the second aqueous solution including citric acid as antioxidant agent, or a combination of citric acid and sodium ascorbate, and **in that** the second aqueous solution may additionally contain malic acid as antimicrobial agent, and where the citric acid and, as the case may be, the malic acid, behave as metal ion chelating agents.

2. The edible coating for the preservation of pieces of fruit, according to the first claim, **characterized in that** the alginate is at a concentration of between 0.1 % and 0.6% by weight relative to the total weight of the first aqueous solution.

3. The edible coating for the preservation of pieces of fruit, according to the first claim, **characterized in that** the first polysaccharide-based aqueous solution includes, further to the alginate, a low methoxyl pectin (MD) of between 35% and 45% and which is at a low concentration of between 0.05% and 1% by weight relative to the total weight of the first aqueous solution.

4. The edible coating for the preservation of pieces of fruit, according to the previous claim, **characterized in that** the pectin is at a concentration of between 0.1% and 0.5% by weight relative to the total weight of the first aqueous solution.

5. The edible coating for the preservation of pieces of fruit, according to the first claim, **characterized in that** the calcium ascorbate is at a concentration of between 2% and 15% by weight relative to the total weight of the second aqueous solution.

6. The edible coating for the preservation of pieces of fruit, according to the previous claim, **characterized in that** the calcium ascorbate is at a concentration of between 3% and 12% by weight relative to the total weight of the second aqueous solution.

7. The edible coating for the preservation of pieces of fruit, according to the first claim, **characterized in that** the calcium lactate is at a concentration of between 2% and 8% by weight relative to the total weight of the second aqueous solution.

8. The edible coating for the preservation of pieces of fruit, according to the previous claim, **characterized in that** the calcium lactate is at a concentration of between 2.5% and 6% by weight relative to the total weight of the second aqueous solution.

9. The edible coating for the preservation of pieces of fruit, according to the first claim, **characterized in that** the concentration of citric acid, alone or in combination with the malic acid, is above 0.5% by weight relative to the total weight of the components of the second aqueous solution, excluding the water.

10. The edible coating for the preservation of pieces of fruit, according to the first claim, **characterized in that** the citric acid is at a concentration of between 7% and 12% by weight relative to the total weight of the components of the second aqueous solution, excluding the water and, as the case may be, the malic acid is at a concentration of between 10% and 30% by weight relative to the total weight of the components of the second aqueous solution, excluding the water.

11. A process for the manufacture of the edible coating for the preservation of pieces of fruit described in the foregoing claims, **characterized in that** it comprises the following steps of:
• preparing the first polysaccharide-based aqueous solution, by mixing the polysaccharide or polysaccharides with cold water, between 4°C and 8°C, with constant stirring until dissolution is completed.
• preparing the second aqueous solution by mixing the calcium, the antioxidant agent and, as the case may be, the antimicrobial agent, which are in powdered form, in order, once these powdered ingredients are intimately mixed, to dissolve the mixture in cold water, with constant stirring, at a temperature of between 4°C and 8°C.

12. A process for the application of the edible coating for the preservation of pieces of fruit described in claims 1 to 10, **characterized in that** it comprises the following steps of:
• washing, peeling and slicing the fruit, all at a temperature of around 4°C.
• applying a first cold aqueous polysaccharide-based solution to the pieces of fruit, at between 4°C and 8°C, for a period of time of between 40 seconds and 120 seconds.
• removing the excess coating of the first aqueous solution.
• applying a second aqueous solution to the pieces of fruit, also at low temperature of between 4°C and 8°C, containing the calcium, the antioxidant agent and, as the case may be, the antimicrobial agent, for a period of time of between 40 seconds and 120 seconds.
• removing the excess coating of the second aqueous solution.
• packaging the coated fruit.

13. The process for the application of the edible coating for the preservation of pieces of fruit, according to the previous claim, **characterized in that** the contact between the coating and the pieces of fruit is made by spraying the respective aqueous solution.

14. The process for the application of the edible coating for the preservation of pieces of fruit, according to the twelfth claim, **characterized in that** the contact between the coating and the pieces of fruit is made by immersion in the respective aqueous solution.
